# EUROPEAN PATENT SPECIFICATION

(11) **EP 2 882 021 B1**
(45) Date of publication and mention of the grant of the patent: **21.11.2018**
(21) Application number: 13826085.6
(22) Date of filing: 31.07.2013
(51) Int. Cl.: H01M 8/04828, H01M 16/00, H01M 8/04701, H01M 8/124, H01M 8/04992

(54) **CONTROL DEVICE, FUEL CELL SYSTEM, AND CONTROL METHOD**
STEUERUNGSVORRICHTUNG, BRENNSTOFFZELLENSYSTEM UND STEUERUNGSVERFAHREN
DISPOSITIF DE COMMANDE, SYSTÈME DE PILE À COMBUSTIBLE ET PROCÉDÉ DE COMMANDE

(30) Priority: 02.08.2012 JP 2012172272
(43) Date of publication of application: 10.06.2015
(73) Proprietor: Kyocera Corporation, Kyoto-shi Kyoto 612-8501 (JP)
(72) Inventor: NAKAMURA, Kazutaka, Kyoto-shi, Kyoto 612-8501 (JP); OKINO, Kenta, Kyoto-shi, Kyoto 612-8501 (JP); SATO, Hirotaka, Kyoto-shi, Kyoto 612-8501 (JP); SHIGEHISA, Takashi, Kyoto-shi, Kyoto 612-8501 (JP); ONO, Takashi, Kyoto-shi, Kyoto 612-8501 (JP); TANIGUCHI, Eiji, Kyoto-shi, Kyoto 612-8501 (JP); INOUE, Hiroshi, Kyoto-shi, Kyoto 612-8501 (JP)
(74) Representative: Schwabe - Sandmair - Marx
(86) International application number: PCT/JP2013/070700
(87) International publication number: WO 2014/021359

(56) References cited:
- EP-A1- 2 869 380
- WO-A1-2005/038973
- JP-A- 2002 198 079
- JP-A- 2002 198 079
- JP-A- 2003 163 013
- JP-A- 2003 163 013
- JP-A- 2008 022 650
- JP-A- 2008 262 727
- US-A1- 2004 053 093

## Description

### TECHNICAL FIELD

The present invention relates to a control apparatus which controls a fuel cell unit provided with a power generation unit and auxiliaries and a storage battery unit, a fuel cell system therefor, and a control method therefor.

### BACKGROUND ART

Recently, it is known a fuel cell unit provided with a power generation unit which generates power upon chemical reaction and auxiliaries which assists an operation of the power generation unit (for example, Patent Literature 1).

Incidentally, as an operation mode of a fuel cell unit, there is known an operation mode in which a power consumption of the auxiliaries is covered by the output power from the power generation unit (hereinafter, idling mode) (for example, Patent Literature 2 and Non Patent Literature 1). In particular, in the idling mode, the output power from the power generation unit is controlled to be comparable to the power consumption of the auxiliaries. In the idling mode, the operation of the fuel cell unit is continued when a power demand in a load is temporarily low, for example.

### CITATION LIST

### PATENT LITERATURE

Patent Literature 1: Japanese Patent Application Publication No. 2010-15783
Patent Literature 2: Japanese Patent Application Publication No. 2006-12689

### NON PATENT LITERATURE

Non Patent Literature 1: Osaka Gas Co., Ltd., "SOFC System Technological Development", [Online], [searched on June 27, 2012], Internet (URL: http://www.osakagas.co.jp/rd/fuelcell/sofc/teclmology/system.html)

EP 2 869 380 A1 discloses a control apparatus including a control unit which instructs a constant temperature mode to the fuel cell unit as one of operation modes, the constant temperature mode being a mode for performing an control to cover power consumption of the auxiliaries by power supplied from the outside and an control to keep a temperature of the power generation unit constant within a prescribed temperature range. In the constant temperature mode, power output from the power generation unit is at least smaller than the power consumption of the auxiliaries.

JP 2003 163013 A discloses a fuel cell system comprising a fuel cell and a storage battery. The means for controlling the fuel cell system controls the fuel cell system to realize the power generation of step (k) in which energy cost is minimum in the fuel cell by assuming that the unit price of discharge and charge electric power rises as the state of charge of the storage battery is little, calculating power generation cost in each step (i) by simulation calculation when the step of the electric power generation of the fuel cell is changed from 1 to (n), calculating an energy cost by subtracting the value of the electric charging power of the storage battery from the electric power cost when the storage battery is charged, and by adding the value of the electric discharge power of the storage battery to the electric power generation cost when the battery is discharged.

JP 2002 198079 discloses a control device for a fuel cell system. An operation schedule making part divides a day into a plurality of time slots according to difference of unit price of electricity fee, at each of which, a unit price of electricity is compared with a power-generating unit price for a fuel cell calculated at a power-generating unit price calculating part, where, the operation schedule of the fuel cell is made so that a storage cell is charged at time zones when the unit price of electricity is equivalent to power generating unit price.

### SUMMARY OF INVENTION

However, in the above-described idling mode, the power consumption of the auxiliaries is covered by the output power of the power generation unit, and thus, it is necessary to supply the fuel cell unit with an amount of fuel (gas, etc.) that would enable the power generation unit to generate power, as a result of which it is not possible to sufficiently save the fuel.

Thus, the present invention has been achieved in order to resolve the above-described problems, and an object thereof is to provide a control apparatus, a fuel cell system, and a control method which can perform effective operation control of a fuel cell unit.

The scope of the invention is defined in the appended claims. Any reference to "embodiment(s)", "example(s)" or "aspect(s) of the invention" in this description not falling under the scope of the claims should be interpreted as illustrative example(s) for understanding the invention.

A control apparatus in a first feature controls a fuel cell unit provided with a power generation unit which generates power upon chemical reaction and auxiliaries which assists an operation of the power generation unit, and a storage battery unit which has a storage battery charged by power supplied from a grid or the power generation unit. The control apparatus includes: a control unit which instructs an operation mode of the fuel cell unit to the fuel cell unit. The operation mode of the fuel cell unit includes: a power generation mode for aggressively performing the power generation by the power generation unit; and a constant temperature mode for performing a control to cover a power consumption of the auxiliaries by power supplied from outside and a control to keep a temperature of the power generation unit within a predetermined temperature range, where the power output from the power generation unit is smaller than the power consumption of the auxiliaries. The control unit instructs to change the operation mode of the fuel cell unit to the constant temperature mode so that the storage battery is charged by the power supplied from the grid, when the storage battery is charged and when a power buying unit price from the grid falls below a predetermined value.

In the first feature, the control unit instructs to change the operation mode of the fuel cell unit to the power generation mode so that the storage battery is charged by the power output from the power generation unit, when the storage battery is charged and when the power buying unit price exceeds the predetermined value.

In the first feature, the power generation mode includes a rated power generation mode for controlling power output from the power generation unit at rated power. The control unit instructs the rated power generation mode when the operation mode of the fuel cell unit is instructed so as to charge the storage battery.

In the first feature, the predetermined value is a power generation unit price of the power generation unit in the rated power generation mode.

In the first feature, the predetermined temperature range is a temperature range lower than a power generation temperature when the power is generated at the power generation unit in the power generation mode.

In the first feature, the control unit instructs a self-support mode as one of the operation modes, the self-support mode being a mode for performing a control to cover the power consumption of the auxiliaries by the power output from the power generation unit.

In the first feature, the control unit instructs to change the operation mode of the fuel cell unit to the self-support mode when a power failure occurs.

In the first feature, the predetermined temperature range is lower than the temperature of the power generation unit in the self-support mode.

In the first feature, the power generation unit has a fuel cell of a SOFC system.

In the first feature, the power generation temperature is 650°C to 1000°C, and the predetermined temperature range is 450°C to 600°C.

In the first feature, an amount of fuel to be supplied to the power generation unit in the constant temperature mode is smaller than an amount of fuel to be supplied to the power generation unit in the power generation mode.

A fuel cell system according to a second feature includes: a fuel cell unit provided with a power generation unit which generates power upon chemical reaction and auxiliaries which assists an operation of the power generation unit; and a storage battery unit which has a storage battery charged by power supplied from a grid or the power generation unit. The fuel cell system includes: a control unit which controls an operation of the fuel cell unit by one of operation modes, the operation modes including a power generation mode for aggressively performing the power generation by the power generation unit; and a constant temperature mode for performing a control to cover a power consumption of the auxiliaries by power supplied from outside and a control to keep a temperature of the power generation unit constant within a predetermined temperature range are performed, where the power output from the power generation unit is smaller than the power consumption of the auxiliaries. The control unit controls to change the operation of the fuel cell unit to the constant temperature mode so that the storage battery is charged by the power supplied from the grid, when the storage battery is charged and when a power buying unit price from the grid falls below a predetermined value.

A control method according to a third feature is a method of controlling a fuel cell unit provided with a power generation unit which generates power upon chemical reaction and auxiliaries which assists an operation of the power generation unit, and a storage battery unit which has a storage battery charged by power supplied from a grid or the power generation unit. The control method includes: a step of instructing one of operation modes to the fuel cell unit, the operation modes including a power generation mode for aggressively performing the power generation by the power generation unit; and a constant temperature mode for performing a control to cover a power consumption of the auxiliaries by power supplied from outside and a control to keep a temperature of the power generation unit constant within a predetermined temperature range, where the power output from the power generation unit is smaller than the power consumption of the auxiliaries. The operation mode of the fuel cell unit is instructed to be the constant temperature mode so that the storage battery is charged by the power supplied from the grid, when the storage battery is charged and when a power buying unit price from the grid falls below a predetermined value.

According to the present invention, it is possible to provide a control apparatus, a fuel cell system, and a control method which can sufficiently save fuel.

### BRIEF DESCRIPTION OF DRAWINGS

[Fig. 1] Fig. 1 is a diagram showing an energy management system 100 according to a first embodiment.
[Fig. 2] Fig. 2 is a diagram showing a consumer's facility 10 according to the first embodiment.
[Fig. 3] Fig. 3 is a diagram showing a fuel cell unit 150 according to the first embodiment.
[Fig. 4] Fig. 4 is a diagram showing an EMS 200 according to the first embodiment.
[Fig. 5] Fig. 5 is a flowchart showing a control method according to the first embodiment.

### DESCRIPTION OF EMBODIMENTS

Hereinafter, a control apparatus according to embodiments of the present invention will be described with reference to the drawings. In the following drawings, identical or similar components are denoted by identical or similar reference numerals.

It should be understood that the drawings are schematic only and the ratio of dimensions is not to scale. Therefore, specific dimensions should be determined with reference to the description below. It is needless to mention that different relationships and ratio of dimensions may be included in different drawings.

### [Outline of the embodiments]

A control apparatus according to embodiments controls a fuel cell unit provided with a power generation unit which generates power upon chemical reaction and auxiliaries which assists an operation of the power generation unit, and a storage battery unit which has a storage battery charged by power supplied from a grid or the power generation unit. The control apparatus includes: a control unit which instructs an operation mode of the fuel cell unit to the fuel cell unit. The operation mode of the fuel cell unit includes: a power generation mode for aggressively performing the power generation by the power generation unit; and a constant temperature mode for performing a control to cover a power consumption of the auxiliaries by power supplied from outside and a control to keep a temperature of the power generation unit within a predetermined temperature range, where the power output from the power generation unit is smaller than the power consumption of the auxiliaries. The control unit instructs to change the operation mode of the fuel cell unit to the constant temperature mode so that the storage battery is charged by the power supplied from the grid, when the storage battery is charged and when a power buying unit price from the grid falls below a predetermined value.

In the embodiments, the operation modes including a constant temperature mode are introduced. As a result, it is possible to effectively operate and control the fuel cell unit.

### [First Embodiment]

### (Energy management system)

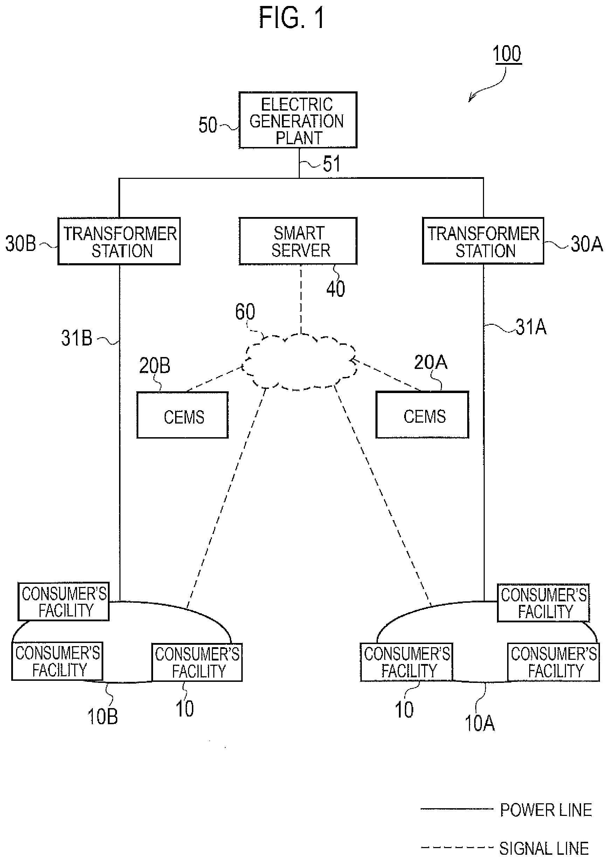

The energy management system according to the first embodiment will be described, below. Fig. 1 is a diagram showing an energy management system 100 according to the first embodiment.

As shown in Fig. 1, the energy management system 100 includes a consumer's facility, a CEMS 20, a transformer station 30, a smart server 40, and an electric generation plant 50. It is noted that the consumer's facility, the CEMS 20, the transformer station 30, and the smart server 40 are connected by a network 60.

The consumer's facility has a power generation apparatus and a power storage apparatus, for example. The power generation apparatus is an apparatus which uses fuel to output power such as a fuel cell, for example. The power storage apparatus such as a secondary battery is an apparatus in which power is stored.

The consumer's facility may be a detached residence, a housing complex such as an apartment house. Or, the consumer's facility may be a shop such as a corner store or a supermarket. It is noted that the consumer's facility may be a business facility such as an office building or a factory.

In the first embodiment, a consumer's facility group 10A and a consumer's facility group 10B are configured by a plurality of the consumer's facilities 10. The consumer's facility group 10A and consumer's facility group 10B are classified into each geographical region, for example.

The CEMS 20 controls an interconnection between the plurality of consumer's facilities 10 and the power grid. It is noted that the CEMS 20 may be also called a CEMS (Cluster/Community Energy Management System), since the CEMS 20 manages the plurality of consumer's facilities 10. Specifically, the CEMS 20 disconnects the plurality of consumer's facilities 10 and the power grid at a power failure or the like. On the other hand, the CEMS 20 interconnects the plurality of consumer's facilities 10 to the power grid, for example, at restoration of power.

In the first embodiment, a CEMS 20A and a CEMS 20B are provided. The CEMS 20A controls an interconnection between the consumer's facilities 10 included in the consumer's facility group 10A and the power grid, for example. The CEMS 20B controls an interconnection between the consumer's facilities 10 included in the consumer's facility group 10B and the power grid, for example.

The transformer station 30 supplies power to the plurality of consumer's facilities 10 through a distribution line 31. Specifically, the transformer station 30 lowers the voltage supplied from the electric generation plant 50.

In the first embodiment, a transformer station 30A and a transformer station 30B are provided. The transformer station 30A supplies power to the consumer's facilities 10 included in the consumer's facility group 10A through a distribution line 31A, for example. The transformer station 30B supplies power to the consumer's facilities 10 included in the consumer's facility group 10B through a distribution line 31B, for example.

The smart server 40 manages a plurality of the CEMSs 20 (here, the CEMS 20A and CEMS 20B). Further, the smart server 40 manages a plurality of the transformer stations 30 (here, the transformer station 30A and the transformer station 30B). In other words, the smart server 40 integrally manages the consumer's facilities 10 included in the consumer's facility groups 10A and 10B. For example, the smart server 40 has a function of balancing the power to be supplied to the consumer's facility group 10A and the power to be supplied to the consumer's facility group 10B.

The electric generation plant 50 generates power by thermal power, wind power, water power, atomic power, solar power or the like. The electric generation plant 50 supplies power to the plurality of the transformer stations 30 (here, the transformer station 30A and the transformer station 30B) through an electric feeder line 51.

The network 60 is connected to each apparatus via a signal line. The network 60 is an Internet, a wide area network, a narrow area network, and a mobile phone network, for example.

### (Consumer's facility)

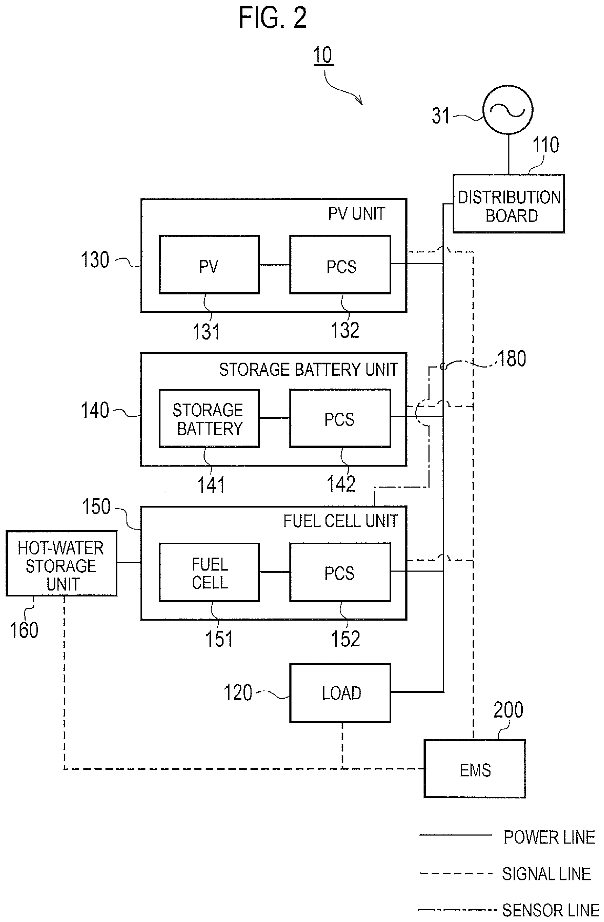

The consumer's facility according to the first embodiment will be described, below. Fig. 2 is a diagram showing the details of the consumer's facility according to the first embodiment.

As shown in Fig. 2, the consumer's facility includes a distribution board 110, a load 120, a PV unit 130, a storage battery unit 140, a fuel cell unit 150, a hot-water storage unit 160, and an EMS 200.

In the first embodiment, the consumer 10 includes an ammeter 180. The ammeter 180 is used for rated power generation control on the fuel cell unit 150. The ammeter 180 is arranged upstream (at the side closer to the grid) of a connection point between the storage battery unit 140 and a power line and upstream (at the side closer to the grid) of a connection point between the fuel cell unit 150 and a power line, on the power line connecting the storage battery unit 140 and the fuel cell unit 150, and the grid. It is natural that the ammeter 180 is arranged upstream (at the side closer to the grid) of the connection point between the load 120 and the power line.

It should be noted that in the first embodiment, each unit is connected to the power line, in order of proximity to the grid, that is, in order of the PV unit 130, the storage battery unit 140, the fuel cell unit 150, and a load 120.

The distribution board 110 is connected to the distribution line 31 (grid). The distribution board 110 is connected, via a power line, to the load 120, the PV unit 130, the storage battery unit 140, and the fuel cell unit 150.

The load 120 is an apparatus which consumes the power supplied via a power line. Examples of the load 120 include an apparatus such as a refrigerator, a freezer, a lighting, and an air conditioner.

The PV unit 130 includes a PV 131 and a PCS 132. The PV 131 is an example of the power generation apparatus, and is a solar light power generation apparatus (Photovoltaic device) which generates power in response to reception of solar light. The PV 131 outputs the generated DC power. The amount of power generated by the PV 131 varies depending on the amount of solar radiation entering the PV 131. The PCS 132 is an apparatus (Power Conditioning System) which converts the DC power output from the PV 131, into AC power. The PCS 132 outputs the AC power to the distribution board 110 via a power line.

In the first embodiment, the PV unit 130 may include a pyranometer which measures the solar radiation entering the PV 131.

The PV unit 130 is controlled by an MPPT (Maximum Power Point Tracking) method. In particular, the PV unit 130 optimizes an operation point (point determined by an operation-point voltage value and power value, or a point determined by an operation-point voltage value and current value) of the PV 131.

The storage battery unit 140 includes a storage battery 141 and a PCS 142. The storage battery 141 is an apparatus which accumulates power. The PCS 142 is an apparatus (Power Conditioning System) which converts the AC power supplied from the distribution line 31 (grid), into DC power. Further, the PCS 142 converts the DC power output from the storage battery 141, into AC power. The storage battery 141 may accumulate the power supplied from a fuel cell unit 150 described later. The AC power supplied from the fuel cell unit 150 is converted into DC power by the PCS 142, and then, accumulated into the storage battery 141.

The fuel cell unit 150 includes a fuel cell 151 and a PCS 152. The fuel cell 151 is an example of a power generation apparatus, and an apparatus which outputs power by using a fuel gas. The PCS 152 is an apparatus (Power Conditioning System) which converts the DC power output from the fuel cell 151, into AC power.

The fuel cell unit 150 is operated by rated power generation control. In particular, the fuel cell unit 150 controls the fuel cell 151 so that the power output from the fuel cell 151 reaches a rated power (for example, 700 W). In other words, the fuel cell unit 150 controls the power output from the fuel cell 151 so that the power consumption of the auxiliaries and the power consumption of the load 120 are covered by the power output from the fuel cell 151 and the surplus power is supplied to the storage battery unit 140.

The hot-water storage unit 160 is an example of a heat storage apparatus which converts power into heat and stores the converted heat as hot water, and stores the heat generated by a co-generation equipment such as the fuel cell unit 150 as hot water. Specifically, the hot-water storage unit 160 includes a hot-water storage tank where the water supplied from the hot-water storage tank is warmed by the heat exhausted by drive (power generation) of the fuel cell 151. In particular, the hot-water storage unit 160 warms the water supplied from the hot-water storage tank and feeds the warmed water back to the hot-water storage tank.

The EMS 200 is an apparatus (Energy Management System) which controls the PV unit 130, the storage battery unit 140, the fuel cell unit 150, and the hot-water storage unit 160. Specifically, the EMS 200 is connected, via a signal line, to the PV unit 130, the storage battery unit 140, the fuel cell unit 150, and the hot-water storage unit 160, and controls the PV unit 130, the storage battery unit 140, the fuel cell unit 150, and the hot-water storage unit 160. Further, the EMS 200 controls an operation mode of the fuel cell unit 150.

Further, the EMS 200 is connected, via the network 60, to various types of servers. The various types of servers store information such as a purchase unit price of power supplied from a grid, a sales unit price of the power supplied from the grid, and a purchase unit price of fuel, for example (hereinafter, energy rate information).

Alternatively, various types of servers store information for predicting the power consumption of the load 120 (hereinafter, consumed-energy prediction information), for example. The consumed-energy prediction information may be generated on the basis of an actual value of the power consumption of the load 120 in the past, for example. Alternatively, the consumed-energy prediction information may be a model of the power consumption of the load 120.

Alternatively, various types of servers store information for predicting an amount of power generated by the PV 131 (hereinafter, PV-power-generation-amount prediction information), for example. The PV-power-generation prediction information may be a predicted value of a solar radiation entering the PV 131. Alternatively, the PV-power-generation prediction information may be a weather forecast, a season, and hours of sunlight, for example.

### (Fuel cell unit)

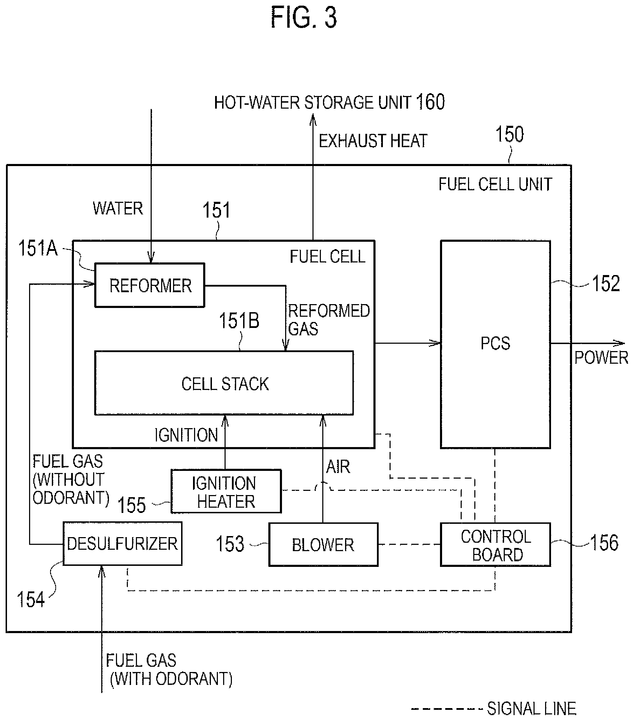

Hereinafter, the fuel cell unit according to the first embodiment will be described. Fig. 3 is a diagram showing the fuel cell unit 150 according to the first embodiment.

As shown in Fig. 3, the fuel cell unit 150 includes a fuel cell 151, a PCS 152, a blower 153, a desulfurizer 154, an ignition heater 155, and a control board 156.

The fuel cell 151 is an apparatus which uses fuel to output power, as described above. The fuel cell 151 is a fuel cell of a SOFC (Solid Oxide Fuel Cell) system, for example. Specifically, the fuel cell 151 includes a reformer 151A and a cell stack 151B.

The reformer 151A generates reformed gas from fuel obtained by removing odorant by the desulfurizer 154 described later. The reformed gas is comprised of hydrogen and carbon monoxide.

The cell stack 151B generates power upon chemical reaction between air (oxygen) supplied from the blower 153 described later and the reformed gas. Specifically, the cell stack 151B has a structure obtained by stacking a plurality of cells on top of one another. Each cell has a structure in which an electrolyte is sandwiched between a fuel electrode and an air electrode. The fuel electrode is supplied with reformed gas (hydrogen) and the air electrode is supplied with air (oxygen). In the electrolyte, a chemical reaction between reformed gas (hydrogen) and air (oxygen) occurs, and as a result, power (DC power) and heat are generated.

The PCS 152 is an apparatus which converts the DC power output from the fuel cell 151 into AC power, as described above.

The blower 153 supplies the fuel cell 151 (cell stack 151B) with air. The blower 153 is configured by a fan, for example.

The desulfurizer 154 removes the odorant included in fuel supplied from outside. Fuel may be city gas or LP gas.

The ignition heater 155 ignites fuel not chemically reacted in the cell stack 151B (hereinafter, unreacted fuel), and maintains a temperature of the cell stack 151B at high temperature. That is, the ignition heater 155 ignites the unreacted fuel leaked from an opening of each cell configuring the cell stack 151B. It should be noted that the ignition heater 155 may suffice to ignite the unreacted fuel in a case where the unreacted fuel is not burnt (for example, when the fuel cell unit 150 is started). Then, once ignited, when the unreacted fuel gradually leaked from the cell stack 151B keeps on burning, the temperature of the cell stack 151B is kept at high temperature.

The control board 156 is a board mounted with a circuit which controls the fuel cell 151, the PCS 152, the blower 153, the desulfurizer 154, the ignition heater 155, and the control board 156.

In the first embodiment, the cell stack 151B is an example of a power generation unit which generates power upon chemical reaction. The reformer 151A, the blower 153, the desulfurizer 154, the ignition heater 155, and the control board 156 are an example of auxiliaries which assists an operation of the cell stack 151B (power generation unit). Further, a part of the PCS 152 may be treated as the auxiliaries.

In the first embodiment, an operation mode of the fuel cell unit 150 includes a power generation mode, an idling mode, and a constant temperature mode.

The power generation mode is an operation mode in which the power generation by the cell stack 151B is aggressively performed. The power generation mode includes a load following mode and a rated power generation mode.

Firstly, the load following mode is an operation mode (load following control) in which an amount of power generation is controlled to increase and decrease in a manner that the power output from the fuel cell 151 (cell stack 151B) follows the power required in the load 120. In particular, in the load following mode, so that the product of a current value detected by the ammeter 180 and power detected by the PCS 152 becomes target received power, the power output from the fuel cell 151 is controlled.

Next, the rated power generation mode is an operation mode (rated power generation control) in which the power output from the fuel cell 151 (cell stack 151B) is controlled to become rated power.

In the load following mode and the rated power generation mode, the power consumption of the auxiliaries and the power consumption of the load 120 are covered by the power output from the fuel cell 151. Further, in the rated power generation mode, the power output from the fuel cell 151 is controlled so that the surplus power is supplied to the storage battery unit 140. Here, it should be noted hero that the fuel cell unit 150 is arranged downstream of the ammeter 180, and thus, the power consumption of the auxiliaries also is covered by the power output from the fuel cell 151.

Here, the temperature of the cell stack 151B in the power generation mode is maintained at 650 to 1000°C (for example, about 700°C) as a power generation temperature, upon chemical reaction and burning of an unreacted fuel. Such a power generation temperature, that is, when reformed gas (hydrogen) and air (oxygen) are obtained, is in a temperature range in which a chemical reaction is promoted.

Incidentally, it is possible to completely stop the fuel cell unit 150. For example, the fuel cell unit 150 may be completely stopped when the fuel cell unit 150 is not used for a long time. However, it should be noted that when the fuel cell unit 150 is completely stopped, the auxiliaries also is stopped and the temperature of the fuel cell 151 (cell stack 151B) becomes low, and thus, it takes a long period of time until the temperature rises to a level by which it would be possible to generate power. Therefore, in the first embodiment, in order to avoid a complete stoppage of the fuel cell unit 150 as much as possible, the idling mode and the constant temperature mode are provided in the operation mode.

The idling mode is an operation mode in which the power consumption of the auxiliaries is covered by the power output from the fuel cell 151 (cell stack 151B). It should be noted here that in the idling mode, the power consumption of the load 120 is not covered by the power output from the fuel cell 151. Further, the idling mode as used herein may also be called a self-support mode because this is a mode in which the output power from the fuel cell unit 150 is controlled to be zero.

Here, the temperature of the cell stack 151B in the idling mode is maintained at a power generation temperature (for example, about 700°C) similar to that in the rated power generation mode, upon chemical reaction and burning of an unreacted fuel. That is, the temperature of the cell stack 151B in the idling mode is in a temperature range in which a chemical reaction is promoted once reformed gas (hydrogen) and air (oxygen) are obtained, similarly to the power generation mode. The idling mode is an operation mode applied when a power failure occurs, for example.

The constant temperature mode is an operation mode in which the power consumption of the auxiliaries is covered by the power supplied from outside, and the cell stack 151B is maintained in a predetermined temperature range. In the constant temperature mode, the power consumption of the auxiliaries may be covered by the power supplied from the grid, and may be covered by the power supplied from the PV 131 or the storage battery 141. In the constant temperature mode, the power output from the fuel cell 151 (cell stack 151B) is smaller than, at least, the power consumption of the auxiliaries, and as in the idling mode, the power falls short of the strength allowing the auxiliaries to be operated. For example, in the constant temperature mode, the power is not output from the fuel cell 151 (cell stack 151B).

Here, the temperature of the cell stack 151B in the constant temperature mode is kept, primarily, by the burning of an unreacted fuel. Further, the temperature of the cell stack 151B in the constant temperature mode is lower than the temperature of the cell stack 151B in the power generation mode. Likewise, the temperature of the cell stack 151B in the constant temperature mode is lower than the temperature of the cell stack 151B in the idling mode. However, as a result of the unreacted fuel being burnt, the temperature of the cell stack 151B in the constant temperature mode is kept at a certain level of high temperature (predetermined temperature range).

In the first embodiment, the predetermined temperature range is slightly lower than the power generation temperature in the power generation mode, for example, about 450°C to 600°C, and is in a temperature range in which a sufficient chemical reaction does not easily occur even when the reformed gas (hydrogen) and air (oxygen) are obtained. When the temperature of the cell stack 151B is kept within a predetermined temperature range, the reaction speed of a chemical reaction is not high enough, and thus, the voltage output from the fuel cell 151 (cell stack 151B) is lower than rated voltage (for example, 200 V). In the constant temperature mode, a chemical reaction may not occur at all, or a slight chemical reaction may occur. However, the predetermined temperature range is obviously higher than a normal temperature. Thus, in the constant temperature mode, also when it is necessary to generate power, it takes less time to reach a temperature at which the chemical reaction is promoted as compared to a state where the fuel cell unit 150 is completely stopped and it is possible to shorten a time until the required power is output.

Further, the amount of fuel to be supplied to the cell stack 151B in the constant temperature mode is smaller than the amount of fuel to be supplied to the cell stack 151B in the power generation mode.

### (Configuration of EMS)

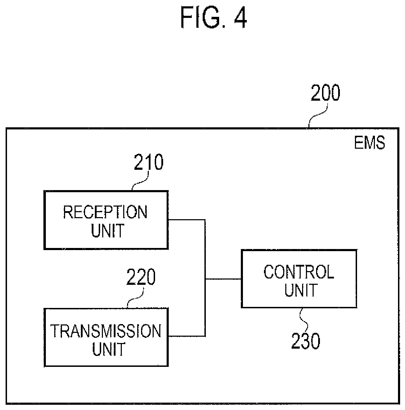

The EMS of the first embodiment will be described, below. Fig. 4 is a block diagram showing the EMS 200 according to the first embodiment.

As shown in Fig. 4, the EMS 200 has a reception unit 210, a transmission unit 220, and a control unit 230.

The reception unit 210 receives various types of signals from an apparatus connected via a signal line. For example, the reception unit 210 may receive information indicating the amount of power generated by the PV 131, from the PV unit 130. The reception unit 210 may receive information indicating the amount of power to be stored in the storage battery 141, from the storage battery unit 140. The reception unit 210 may receive information indicating the amount of power generated by the fuel cell 151, from the fuel cell unit 150. The reception unit 210 may receive information indicating the amount of hot water to be stored in hot-water storage unit 160, from a hot-water storage unit 160.

In the first embodiment, the reception unit 210 may receive energy rate information, consumed-energy prediction information, and PV-power-generation-amount prediction information from various types of servers via a network 60. However, the energy rate information, the consumed-energy prediction information, and the PV-power-generation-amount prediction information may be stored in advance in the EMS 200.

The transmission unit 220 transmits various types of signals to an apparatus connected via a signal line. For example, the transmission unit 220 transmits a signal for controlling the PV unit 130, the storage battery unit 140, the fuel cell unit 150, and the hot-water storage unit 160, to each apparatus. The transmission unit 220 transmits a control signal for controlling the load 120, to the load 120.

The control unit 230 uses a predetermined communication protocol such as ECHONET Lite or ZigBee (registered trademark) to control the load 120, the PV unit 130, the storage battery unit 140, the fuel cell unit 150, and the hot-water storage unit 160. The control unit 230 controls the storage battery unit 140 to charge and discharge the storage battery 141, for example.

In the first embodiment, the control unit 230 uses a predetermined communication protocol such as ECHONET Lite to instruct the operation mode of the fuel cell unit 150 to the fuel cell unit 150. In the first embodiment, the operation mode of the fuel cell unit 150 includes the power generation mode (rated power generation mode or load following mode), the idling mode (self-support mode), and the constant temperature mode, as described above.

The control unit 230 instructs the operation mode of the fuel cell unit 150 depending on whether the storage battery 141 needs to be charged. When the storage battery 141 does not need to be charged, the control unit 230 instructs the load following mode when the power consumption of the load 120 exceeds a threshold value, and instructs the idling mode or the constant temperature mode when the power consumption of the load 120 falls below the threshold value, for example.

On the other hand, when the storage battery 141 needs to be charged, the control unit 230 controls the fuel cell unit 150 to operate as follows: When a purchase unit price (power buying unit price) of the power supplied from the grid falls below a predetermined value, the control unit 230 controls the fuel cell unit 150 to operate in the constant temperature mode. In this case, the storage battery 141 is charged by accumulating the power supplied from the grid. On the other hand, when the power buying unit price exceeds the predetermined value, the control unit 230 controls the fuel cell unit 150 to operate in the rated power generation mode. In this case, the storage battery 141 is charged by accumulating the power supplied from the fuel cell unit 150. Here, it should be noted here that the power supplied to the storage battery 141 means surplus power obtained by subtracting the power consumed by the auxiliaries and the load 120 from the power output from the fuel cell 151. However, when the power intended to be charged in the storage battery is equal to or larger than the surplus power, the grid power, in addition to the surplus power, may be supplied to the storage battery 141.

The predetermined value may be set optionally by a user. Alternatively, the predetermined value may be a power generation unit price of the fuel cell 151 in the rated power generation mode, that is, a purchase unit price of fuel required by the fuel cell 151 to generate unit power in the rated power generation mode. Here, it should be noted here that as a characteristic of the fuel cell unit, the rated power generation most excels at gas-electricity energy conversion efficiency. That is, the power generation unit price in the rated power generation mode is lower than the power generation unit price when power smaller than the rated power is generated in the load following mode.

### (Control method)

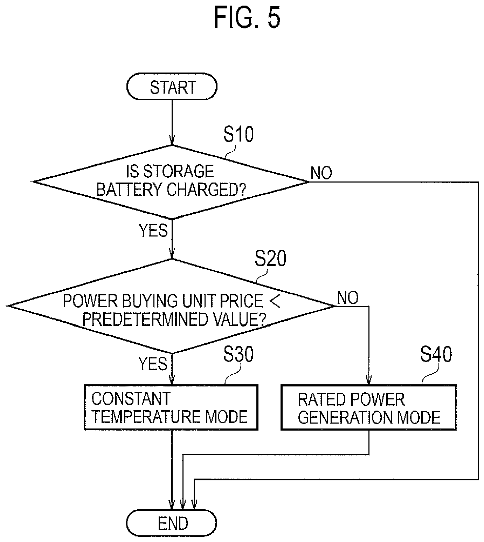

Hereinafter, a control method according to the first embodiment will be described. Fig. 5 is a flowchart showing the control method according to the first embodiment.

As shown in Fig. 5, in step S10, the EMS 200 determines whether or not the storage battery 141 needs to be charged. When the determination result is "YES" and the storage battery 141 is charged, a process in step S20 is performed.

In step S20, the EMS 200 determines whether or not the purchase unit price (power buying unit price) of the power supplied from the grid falls below a predetermined value. When the determination result is "YES", a process in step S30 is performed. When the determination result is "NO", a process in step S40 is performed.

In step S30, the EMS 200 controls the fuel cell unit 150 to operate in the constant temperature mode. As described above, in the constant temperature mode, the power consumption of the auxiliaries is covered by the power supplied from outside, and the temperature of the cell stack 151B is maintained in a predetermined temperature range. In the constant temperature mode, the power output from the fuel cell 151 is smaller than, at least, the power consumption of the auxiliaries, and may even be zero. That is, when the fuel cell unit 150 operates in the constant temperature mode, the storage battery 141 is not capable of receiving the power supply from the fuel cell unit 150, and thus, the storage battery 141 receives the power supply from the grid.

In step S40, the EMS 200 controls the fuel cell unit 150 to operate in the rated power generation mode. In the rated power generation mode, the output from the fuel cell 151 is adjusted to reach the rated power. The power output from the fuel cell 151 covers the power consumption of the auxiliaries and the load 120, and the surplus power is supplied to the storage battery 141.

When the grid is in a power failure state, for example, and the EMS 200 is not capable of receiving the power supply from the grid, the EMS 200 controls the fuel cell unit 150 to operate in the idling mode. As a result, even when it is not possible to receive the power supply from the grid, the fuel cell unit 150 is capable of continuing the operation. Even when the grid is in a power failure state and the auxiliaries is not capable of receiving the power supply from the grid, the power generation in the fuel cell 151 (cell stack 151B) is caused upon chemical reaction, and thus, the power generation is not immediately stopped. That is, even when the power failure occurs and the power supply from the grid to the auxiliaries are thereby stopped, a chemical reaction continues for a while just to cover the power consumption of the auxiliaries. Thus, even when the fuel cell unit 150 detects a power failure during operation in the constant temperature mode, for example, the fuel cell unit 150 is capable of continuing the operation by immediately changing the power supply source to the auxiliaries from the grid to the fuel cell 151 (cell stack 151B). Thus, as described above, in the idling mode, the power output from the fuel cell 151 is supplied to the auxiliaries; however, basically, the power is not supplied to the load 120.

Further, in step S10, when the determination result is "NO" and the storage battery 141 is not charged, the EMS 200 may instruct the load following mode when the power consumption of the load 120 exceeds a threshold value, and may instruct the idling mode or the constant temperature mode when the power consumption of the load 120 falls below the threshold value, for example.

As described above, in the first embodiment, a plurality of operation modes including the constant temperature mode are introduced. As a result, in the constant temperature mode, it is possible to save the fuel supplied to the fuel cell unit 150, even when the best effort is made not to completely stop the fuel cell unit 150. Further, when the power buying unit price from the grid is reasonable, if the storage battery 141 is controlled to be charged by the power supplied from the grid, instead of the surplus power from the fuel cell unit 150, to operate the fuel cell unit 150 in the constant temperature mode, then it is possible to save an amount of fuel supplied to the fuel cell unit 150.

### [Other Embodiments]

Although the present invention has been described with reference to the embodiment described above, it should not be understood that the discussion and drawings constituting a part of the disclosure are limiting the present invention. Various alternative embodiments, examples and operation technology will be apparent to a person skilled in the art from the present disclosure.

Moreover, the fuel cell unit 150 is operated in the idling mode during the grid power failure; however, if there is a power demand in a load, it may be possible to operate in a self-sustained operation mode in which the power that matches the demand is output. In the self-sustained operation mode, the fuel cell unit 150 supplies the power to the auxiliaries by the fuel cell 151 itself, and also, the fuel cell unit 150 increases the output of the fuel cell 151 so that the output power that matches the demand in the load connected to the fuel cell unit 150 is obtained. That is, the self-sustained operation mode and the idling mode differ in that the generated power is output externally; however, these modes are common in that during the grid power failure, the power supply to the auxiliaries is covered by the self-power generation. Thus, it may consider that the self-sustained operation mode is included in the self-support mode.

Further, in the constant temperature mode, the power consumption of the auxiliaries is covered by the power supply from the grid; however, it may be covered by the output from the PV unit 130 and/or the storage battery unit 140 or the like.

In the embodiment, the control apparatus is the EMS 200; however, the embodiment is not limited thereto. The control apparatus may be the PCS 152 or the control board 156.

The EMS 200 may be HEMS (Home Energy Management System), may be SEMS (Store Energy Management System), may be BEMS (Building Energy Management System), and may be FEMS (Factory Energy Management System).

In the embodiment, the consumer's facility 10 includes the load 120, the PV unit 130, the storage battery unit 140, the fuel cell unit 150, and the hot-water storage unit 160. However, it may suffice that the consumer's facility 10 includes at least the load 120 the storage battery unit 140 and the fuel cell unit 150.

In the embodiment, description proceeds with a case where the fuel cell 151 is a fuel cell of a SOFC (Solid Oxide Fuel Cell) system; however, this is not limiting. The fuel cell 151 may be a fuel cell of a PEFC (Polymer Electrolyte Fuel Cell) system, for example.

As described above, needless to say, the present invention includes various embodiments and the like not described here. Moreover, it is also possible to combine the above-described embodiments and modifications. Therefore, the technical range of the present invention is to be defined only by the inventive specific matter according to the adequate claims from the above description.

### INDUSTRIAL APPLICABILITY

According to the present invention, it is possible to provide a control apparatus, a fuel cell system, and a control method which can to sufficiently save fuel.

## Claims

1. A control apparatus (200) which is configured to control a fuel cell unit (150) provided with a power generation unit (151B) which is configured to generate power upon chemical reaction and auxiliaries which are configured to assist an operation of the power generation unit, and a storage battery unit (140) which has a storage battery (141) charged by power supplied from a grid or the power generation unit (151B), comprising:
a control unit (230) which is configured to instruct an operation mode of the fuel cell unit to the fuel cell unit (150), wherein
the operation mode of the fuel cell unit (150) includes: a power generation mode for aggressively performing the power generation by the power generation unit (151B), wherein the power generation mode includes a load following mode and a rated power generation mode in which the power consumption of the auxiliaries and the power consumption of the load are covered by the power output from the power generation unit and in which in the rated power generation mode surplus power is supplied to the storage battery; and a constant temperature mode for performing a control to cover a power consumption of the auxiliaries by power supplied from outside and a control to keep a temperature of the power generation unit within a predetermined temperature range, where the power output from the power generation unit (151B) is smaller than the power consumption of the auxiliaries, and
the control unit (230) is configured to instruct to change the operation mode of the fuel cell unit (150) to the constant temperature mode so that the storage battery (141) is charged by the power supplied from the grid, when the storage battery (141) is charged and when a power buying unit price from the grid falls below a predetermined value,
wherein the amount of fuel to be supplied to the power generation unit (151B) in the constant temperature mode is smaller than the amount of fuel to be supplied to the power generation unit (151B) in the power generation mode,
**characterized in that**
the predetermined value is a power generation unit price of the power generation unit (151B) in the rated power generation mode for controlling power output from the power generation unit (151B),
wherein the predetermined temperature range in the constant temperature mode is 450 °C to 600 °C,
wherein the operation mode of the fuel cell unit (150) further includes an idling mode in which the power output from the power generation unit (151B) is not supplied to a load and the temperature of the power generation unit (151B) is kept at a power generation temperature,
wherein in the idling mode the power consumption of the auxiliaries is covered by the power output from the power generation unit (151B) and the output power of the fuel cell unit (150) is controlled to be zero,
wherein the predetermined temperature range in the constant temperature mode is lower than the power generation temperature in the power generation mode and the idling mode.

2. The control apparatus (200) according to claim 1, wherein
the control unit (230) is configured to instruct to change the operation mode of the fuel cell unit (150) to the power generation mode so that the storage battery (141) is charged by the power output from the power generation unit (151B), when the storage battery (141) is charged and when the power buying unit price exceeds the predetermined value.

3. The control apparatus (200) according to claim 2, wherein
the power generation mode includes the rated power generation mode for controlling power output from the power generation unit (151B) at rated power, and
the control unit (230) is configured to instruct the rated power generation mode when the operation mode of the fuel cell unit (150) is instructed so as to charge the storage battery.

4. The control apparatus (200) according to claim 1, wherein the control unit (230) is configured to instruct to change the operation mode of the fuel cell unit to the idling mode when a power failure occurs.

5. The control apparatus (200) according to claim 1, wherein the power generation unit (151B) has a fuel cell of a SOFC system.

6. The control apparatus (200) according to claim 1, wherein the power generation temperature is 650°C to 1000°C.

7. A fuel cell system including: a fuel cell unit (150) provided with a power generation unit (151B) which is configured to generate power upon chemical reaction and auxiliaries which are configured to assist an operation of the power generation unit (151B); and a storage battery unit (140) which has a storage battery (141) charged by power supplied from a grid or the power generation unit (151B); further comprising:
a control unit (230) which is configured to control an operation of the fuel cell unit (150) by one of operation modes, the operation modes including a power generation mode for aggressively performing the power generation by the power generation unit (151B), wherein the power generation mode includes a load following mode and a rated power generation mode in which the power consumption of the auxiliaries and the power consumption of the load are covered by the power output from the power generation unit and in which in the rated power generation mode surplus power is supplied to the storage battery; and a constant temperature mode for performing a control to cover a power consumption of the auxiliaries by power supplied from outside and a control to keep a temperature of the power generation unit (151B) constant within a predetermined temperature range are performed, where the power output from the power generation unit (151B) is smaller than the power consumption of the auxiliaries, wherein
the control unit (230) is configured to control to change the operation of the fuel cell unit (150) to the constant temperature mode so that the storage battery (141) is charged by the power supplied from the grid, when the storage battery (141) is charged and when a power buying unit price from the grid falls below a predetermined value,
wherein the amount of fuel to be supplied to the power generation unit (151B) in the constant temperature mode is smaller than the amount of fuel to be supplied to the power generation unit (151B) in the power generation mode,
**characterized in that**
the predetermined value is a power generation unit price of the power generation unit (151B) in the rated power generation mode for controlling power output from the power generation unit (151B)),
wherein the predetermined temperature range in the constant temperature mode is 450 °C to 600 °C,
wherein the operation mode of the fuel cell unit (150) further includes an idling mode in which the power output from the power generation unit (151B) is not supplied to a load and the temperature of the power generation unit (151B) is kept at a power generation temperature,
wherein in the idling mode the power consumption of the auxiliaries is covered by the power output from the power generation unit (151B) and the output power of the fuel cell unit (150) is controlled to be zero,
wherein the predetermined temperature range in the constant temperature mode is lower than the power generation temperature in the power generation mode and the idling mode.

8. A control method which controls a fuel cell unit (150) provided with a power generation unit (151B) which generates power upon chemical reaction and auxiliaries which assists an operation of the power generation unit (151B), and a storage battery unit (140) which has a storage battery (141) charged by power supplied from a grid or the power generation unit (151B), comprising:
a step of instructing one of operation modes to the fuel cell unit (150), the operation modes including a power generation mode for aggressively performing the power generation by the power generation unit (151B), wherein the power generation mode includes a load following mode and a rated power generation mode in which the power consumption of the auxiliaries and the power consumption of the load are covered by the power output from the power generation unit and in which in the rated power generation mode surplus power is supplied to the storage battery; and a constant temperature mode for performing a control to cover a power consumption of the auxiliaries by power supplied from outside and a control to keep a temperature of the power generation unit (151B) constant within a predetermined temperature range, where the power output from the power generation unit (151B) is smaller than the power consumption of the auxiliaries, wherein
the operation mode of the fuel cell unit (150) is instructed to be the constant temperature mode so that the storage battery (141) is charged by the power supplied from the grid, when the storage battery (141) is charged and when a power buying unit price from the grid falls below a predetermined value,
wherein the amount of fuel to be supplied to the power generation unit (151B) in the constant temperature mode is smaller than the amount of fuel to be supplied to the power generation unit (151B) in the power generation mode,
**characterized in that**
the predetermined value is a power generation unit price of the power generation unit (151B) in the rated power generation mode for controlling power output from the power generation unit (151B)),
wherein the predetermined temperature range in the constant temperature mode is 450 °C to 600 °C,
wherein the operation mode of the fuel cell unit (150) further includes an idling mode in which the power output from the power generation unit (151B) is not supplied to a load and the temperature of the power generation unit (151B) is kept at a power generation temperature,
wherein in the idling mode the power consumption of the auxiliaries is covered by the power output from the power generation unit (151B) and the output power of the fuel cell unit (150) is controlled to be zero,
wherein the predetermined temperature range in the constant temperature mode is lower than the power generation temperature in the power generation mode and the idling mode.

## Patentansprüche

1. Steuervorrichtung (200), die so konfiguriert ist, dass sie eine Brennstoffzelleneinheit (150), die mit einer Energieerzeugungseinheit (151B), die so konfiguriert ist, dass sie Energie bei einer chemischen Reaktion erzeugt, und Nebenaggregaten versehen ist, die so konfiguriert sind, dass sie einen Betrieb der Energieerzeugungseinheit unterstützen, und eine Akkumulatoreinheit (140) steuert, die einen Akkumulator (141) aufweist, der mit Energie geladen wird, die von einem Netz oder der Energieerzeugungseinheit (151B) zugespeist wird, umfassend:
eine Steuereinheit (230), die so konfiguriert ist, dass sie einen Betriebsmodus der Brennstoffzelleneinheit an die Brennstoffzelleneinheit (150) anweist, wobei:
der Betriebsmodus der Brennstoffzelleneinheit (150) umfasst: einen Energieerzeugungsmodus zum offensiven Durchführen der Energieerzeugung durch die Energieerzeugungseinheit (151B), wobei der Energieerzeugungsmodus einen Lastfolgemodus und einen Nennenergieerzeugungsmodus umfasst, wobei der Energieverbrauch der Nebenaggregate und der Energieverbrauch der Last durch die Energie abgedeckt werden, die von der Energieerzeugungseinheit ausgegeben wird, und wobei überschüssige Energie im Nennenergieerzeugungsmodus an den Akkumulator gespeist wird;
und einen Konstante-Temperatur-Modus zum Durchführen einer Steuerung, um einen Energieverbrauch der Nebenaggregate mit Energie abzudecken, die von außerhalb zugespeist wird, und eine Steuerung durchzuführen, um eine Temperatur der Energieerzeugungseinheit innerhalb eines vordefinierten Temperaturbereichs zu halten, in dem die von der Energieerzeugungseinheit (151B) ausgegebene Energie geringer als der Energieverbrauch der Nebenaggregate ist, und
die Steuereinheit (230) so konfiguriert ist, dass sie eine Änderung des Betriebsmodus der Brennstoffzelleneinheit (150) auf den Konstante-Temperatur-Modus anweist, so dass der Akkumulator (141) mit der vom Netz zugespeisten Energie geladen wird, wenn der Akkumulator (141) geladen wird und wenn ein Energieeinkaufseinheit-Preis aus dem Netz unter einen vordefinierten Wert fällt,
wobei die Brennstoffmenge, die im Konstante-Temperatur-Modus zur Energieerzeugungseinheit (151B) zu speisen ist, geringer als die Brennstoffmenge ist, die im Energieerzeugungsmodus zur Energieerzeugungseinheit (151B) zu speisen ist,
**dadurch gekennzeichnet, dass**:
der vordefinierte Wert ein Energieerzeugungseinheit-Preis der Energieerzeugungseinheit (151B) im Nennenergieerzeugungsmodus zum Steuern der von der Energieerzeugungseinheit (151B) ausgegebenen Energie ist,
wobei der vordefinierte Temperaturbereich im Konstante-Temperatur-Modus 450 °C bis 600 °C ist,
wobei der Betriebsmodus der Brennstoffzelleneinheit (150) ferner einen Leerlaufmodus umfasst, in dem die von der Energieerzeugungseinheit (151B) ausgegebene Energie nicht zu einer Last gespeist wird und die Temperatur der Energieerzeugungseinheit (151B) auf einer Energieerzeugungstemperatur gehalten wird,
wobei der Energieverbrauch der Nebenaggregate im Leerlaufmodus durch die Energie abgedeckt wird, die von der Energieerzeugungseinheit (151B) ausgegeben wird, und die ausgegebene Energie der Brennstoffzelleneinheit (150) auf null gesteuert wird,
wobei der vordefinierte Temperaturbereich im Konstante-Temperatur-Modus geringer als die Energieerzeugungstemperatur im Energieerzeugungsmodus und im Leerlaufmodus ist.

2. Steuervorrichtung (200) nach Anspruch 1, wobei:
die Steuereinheit (230) so konfiguriert ist, dass sie eine Änderung des Betriebsmodus der Brennstoffzelleneinheit (150) auf den Energieerzeugungsmodus anweist, so dass der Akkumulator (141) mit der von der Energieerzeugungseinheit (151B) ausgegebenen Energie geladen wird, wenn der Akkumulator (141) geladen wird und wenn der Energieeinkaufseinheit-Preis den vordefinierten Wert überschreitet.

3. Steuervorrichtung (200) nach Anspruch 2, wobei:
der Energieerzeugungsmodus den Nennenergieerzeugungsmodus zum Steuern der von der Energieerzeugungseinheit (151B) ausgegebenen Energie auf Nennenergie umfasst, und
die Steuereinheit (230) so konfiguriert ist, dass sie den Nennenergieerzeugungsmodus anweist, wenn der Betriebsmodus der Brennstoffzelleneinheit (150) angewiesen ist, um den Akkumulator zu laden.

4. Steuervorrichtung (200) nach Anspruch 1, wobei:
die Steuereinheit (230) so konfiguriert ist, dass sie eine Änderung des Betriebsmodus der Brennstoffzelleneinheit auf den Leerlaufmodus anweist, wenn es zu einem Energieausfall kommt.

5. Steuervorrichtung (200) nach Anspruch 1, wobei die Energieerzeugungseinheit (151B) eine Brennstoffzelle eines SOFC-Systems aufweist.

6. Steuervorrichtung (200) nach Anspruch 1, wobei die Energieerzeugungstemperatur 650 °C bis 1000 °C beträgt.

7. Brennstoffzellensystem, das umfasst: eine Brennstoffzelleneinheit (150), die mit einer Energieerzeugungseinheit (151B), die so konfiguriert ist, dass sie Energie bei einer chemischen Reaktion erzeugt, und Nebenaggregaten versehen ist, die so konfiguriert sind, dass sie einen Betrieb der Energieerzeugungseinheit (151B) unterstützen; und eine Akkumulatoreinheit (140) steuert, die einen Akkumulator (141) aufweist, der mit Energie geladen wird, die von einem Netz oder der Energieerzeugungseinheit (151B) zugespeist wird, ferner umfassend:
eine Steuereinheit (230), die so konfiguriert ist, dass sie einen Betrieb der Brennstoffzelleneinheit (150) mit einem von Betriebsmodi steuert, wobei die Betriebsmodi einen Energieerzeugungsmodus zum offensiven Durchführen der Energieerzeugung durch die Energieerzeugungseinheit (151B) umfassen, wobei der Energieerzeugungsmodus einen Lastfolgemodus und einen Nennenergieerzeugungsmodus umfasst, wobei der Energieverbrauch der Nebenaggregate und der Energieverbrauch der Last durch die Energie abgedeckt werden, die von der Energieerzeugungseinheit ausgegeben wird, und wobei überschüssige Energie im Nennenergieerzeugungsmodus an den Akkumulator gespeist wird;
und einen Konstante-Temperatur-Modus zum Durchführen einer Steuerung, um einen Energieverbrauch der Nebenaggregate mit Energie abzudecken, die von außerhalb zugespeist wird, und eine Steuerung durchzuführen, um eine Temperatur der Energieerzeugungseinheit (151B) konstant innerhalb eines vordefinierten Temperaturbereichs zu halten, durchgeführt werden, in dem die von der Energieerzeugungseinheit (151B) ausgegebene Energie geringer als der Energieverbrauch der Nebenaggregate ist, wobei
die Steuereinheit (230) so konfiguriert ist, dass sie auf eine Änderung des Betriebs der Brennstoffzelleneinheit (150) auf den Konstante-Temperatur-Modus steuert, so dass der Akkumulator (141) mit der vom Netz zugespeisten Energie geladen wird, wenn der Akkumulator (141) geladen wird und wenn ein Energieeinkaufseinheit-Preis aus dem Netz unter einen vordefinierten Wert fällt,
wobei die Brennstoffmenge, die im Konstante-Temperatur-Modus zur Energieerzeugungseinheit (151B) zu speisen ist, geringer als die Brennstoffmenge ist, die im Energieerzeugungsmodus zur Energieerzeugungseinheit (151B) zu speisen ist,
**dadurch gekennzeichnet, dass**:
der vordefinierte Wert ein Energieerzeugungseinheit-Preis der Energieerzeugungseinheit (151B) im Nennenergieerzeugungsmodus zum Steuern der von der Energieerzeugungseinheit (151B) ausgegebenen Energie ist,
wobei der vordefinierte Temperaturbereich im Konstante-Temperatur-Modus 450 °C bis 600 °C ist,
wobei der Betriebsmodus der Brennstoffzelleneinheit (150) ferner einen Leerlaufmodus umfasst, in dem die von der Energieerzeugungseinheit (151B) ausgegebene Energie nicht zu einer Last gespeist wird und die Temperatur der Energieerzeugungseinheit (151B) auf einer Energieerzeugungstemperatur gehalten wird,
wobei der Energieverbrauch der Nebenaggregate im Leerlaufmodus durch die Energie abgedeckt wird, die von der Energieerzeugungseinheit (151B) ausgegeben wird, und die ausgegebene Energie der Brennstoffzelleneinheit (150) auf null gesteuert wird,
wobei der vordefinierte Temperaturbereich im Konstante-Temperatur-Modus geringer als die Energieerzeugungstemperatur im Energieerzeugungsmodus und im Leerlaufmodus ist.

8. Steuerverfahren, das eine Brennstoffzelleneinheit (150), die mit einer Energieerzeugungseinheit (151B), die Energie bei einer chemischen Reaktion erzeugt, und Nebenaggregaten versehen ist, die einen Betrieb der Energieerzeugungseinheit (151B) unterstützen, und eine Akkumulatoreinheit (140) steuert, die einen Akkumulator (141) aufweist, der mit Energie geladen wird, die von einem Netz oder der Energieerzeugungseinheit (151B) zugespeist wird, umfassend:
einen Schritt des Anweisens eines von Betriebsmodi an die Brennstoffzelleneinheit (150), wobei die Betriebsmodi einen Energieerzeugungsmodus zum offensiven Durchführen der Energieerzeugung durch die Energieerzeugungseinheit (151B) umfassen, wobei der Energieerzeugungsmodus einen Lastfolgemodus und einen Nennenergieerzeugungsmodus umfasst, wobei der Energieverbrauch der Nebenaggregate und der Energieverbrauch der Last durch die Energie abgedeckt werden, die von der Energieerzeugungseinheit ausgegeben wird, und wobei überschüssige Energie im Nennenergieerzeugungsmodus an den Akkumulator gespeist wird;
und einen Konstante-Temperatur-Modus zum Durchführen einer Steuerung, um einen Energieverbrauch der Nebenaggregate mit Energie abzudecken, die von außerhalb zugespeist wird, und eine Steuerung durchzuführen, um eine Temperatur der Energieerzeugungseinheit (151B) konstant innerhalb eines vordefinierten Temperaturbereichs zu halten, in dem die von der Energieerzeugungseinheit (151B) ausgegebene Energie geringer als der Energieverbrauch der Nebenaggregate ist, wobei
der Betriebsmodus der Brennstoffzelleneinheit (150) auf den Konstante-Temperatur-Modus angewiesen wird, so dass der Akkumulator (141) mit der vom Netz zugespeisten Energie geladen wird, wenn der Akkumulator (141) geladen wird und wenn ein Energieeinkaufseinheit-Preis aus dem Netz unter einen vordefinierten Wert fällt,
wobei die Brennstoffmenge, die im Konstante-Temperatur-Modus zur Energieerzeugungseinheit (151B) zu speisen ist, geringer als die Brennstoffmenge ist, die im Energieerzeugungsmodus zur Energieerzeugungseinheit (151B) zu speisen ist,
**dadurch gekennzeichnet, dass**:
der vordefinierte Wert ein Energieerzeugungseinheit-Preis der Energieerzeugungseinheit (151B) im Nennenergieerzeugungsmodus zum Steuern der von der Energieerzeugungseinheit (151B) ausgegebenen Energie ist,
wobei der vordefinierte Temperaturbereich im Konstante-Temperatur-Modus 450 °C bis 600 °C ist,
wobei der Betriebsmodus der Brennstoffzelleneinheit (150) ferner einen Leerlaufmodus umfasst, in dem die von der Energieerzeugungseinheit (151B) ausgegebene Energie nicht zu einer Last gespeist wird und die Temperatur der Energieerzeugungseinheit (151B) auf einer Energieerzeugungstemperatur gehalten wird,
wobei der Energieverbrauch der Nebenaggregate im Leerlaufmodus durch die Energie abgedeckt wird, die von der Energieerzeugungseinheit (151B) ausgegeben wird, und die ausgegebene Energie der Brennstoffzelleneinheit (150) auf null gesteuert wird,
wobei der vordefinierte Temperaturbereich im Konstante-Temperatur-Modus geringer als die Energieerzeugungstemperatur im Energieerzeugungsmodus und im Leerlaufmodus ist.

## Revendications

1. Appareil de commande (200) qui est configuré pour commander une unité de pile à combustible (150) comprenant une unité de génération d'énergie (151B) qui est configurée pour générer de l'énergie lors d'une réaction chimique et des éléments auxiliaires qui sont configurés pour faciliter un fonctionnement de l'unité de génération d'énergie, et une unité de batterie de stockage (140) qui possède une batterie de stockage (141) chargée par l'énergie fournie depuis un réseau ou l'unité de génération d'énergie (151B), comprenant :
une unité de commande (230) qui est configurée pour ordonner un mode de fonctionnement de l'unité de pile à combustible à l'unité de pile à combustible (150), dans lequel
le mode de fonctionnement de l'unité de pile à combustible (150) comprend : un mode de génération d'énergie destiné la réalisation agressive de génération d'énergie par l'unité de génération d'énergie (151B), le mode de génération d'énergie comprenant un mode de suivi de charge et un mode de génération d'énergie nominale dans lequel la consommation d'énergie des éléments auxiliaires et la consommation d'énergie de la charge sont couvertes par l'énergie produite en sortie depuis l'unité de génération d'énergie et dans lequel, dans le mode de génération d'énergie nominale, le surplus d'énergie est fourni à la batterie de stockage ; et un mode de température constante destiné à la réalisation d'une commande pour couvrir une consommation d'énergie des éléments auxiliaires par l'énergie fournie depuis l'extérieur et d'une commande pour maintenir une température de l'unité de génération d'énergie dans une plage de températures prédéterminée, où la production en sortie d'énergie depuis l'unité de génération d'énergie (151B) est plus petite que la consommation d'énergie des éléments auxiliaires, et
l'unité de commande (230) est configurée pour ordonner le changement du mode de fonctionnement de l'unité de pile à combustible (150) au mode de température constante de sorte que la batterie de stockage (141) soit chargée par l'énergie fournie depuis le réseau, lorsque la batterie de stockage (141) est chargée et lorsqu'un prix unitaire d'achat d'énergie depuis le réseau public tombe sous une valeur prédéterminée,
dans lequel la quantité de combustible à fournir à l'unité de génération d'énergie (151B) dans le mode de température constante est plus petite que la quantité de combustible à fournir à l'unité de génération d'énergie (151B) dans le mode de génération d'énergie,
**caractérisé en ce que**
la valeur prédéterminée est un prix unitaire de génération d'énergie de l'unité de génération d'énergie (151B) dans le mode de génération d'énergie nominale pour commander la production en sortie d'énergie depuis l'unité de génération d'énergie (151B),
dans lequel la plage de température prédéterminée dans le mode de température constante est de 450 °C à 600 °C,
dans lequel le mode de fonctionnement de l'unité de pile à combustible (150) comprend en outre un mode de fonctionnement au ralenti dans lequel la production en sortie d'énergie depuis l'unité de génération d'énergie (151B) n'est pas fournie à une charge et la température de l'unité de génération d'énergie (151B) est maintenue à une température de génération d'énergie,
dans lequel dans le mode de fonctionnement au ralenti, la consommation d'énergie des éléments auxiliaires est couverte par l'énergie produite en sortie depuis l'unité de génération d'énergie (151B) et l'énergie produite en sortie de l'unité de pile à combustible (150) est commandée pour être nulle,
dans lequel la plage de températures prédéterminée dans le mode de température constante est plus basse que la température de génération d'énergie dans le mode de génération d'énergie et le mode de fonctionnement au ralenti.

2. Appareil de commande (200) selon la revendication 1, dans lequel
l'unité de commande (230) est configurée pour ordonner le changement du mode de fonctionnement de l'unité de pile à combustible (150) au mode de génération d'énergie de sorte que la batterie de stockage (141) soit chargée par l'énergie produite en sortie depuis l'unité de génération d'énergie (151B), lorsque la batterie de stockage (141) est chargée et lorsque le prix unitaire d'achat d'énergie dépasse la valeur prédéterminée.

3. Appareil de commande (200) selon la revendication 2, dans lequel
l'unité de génération d'énergie comprend le mode de génération d'énergie nominale pour commander l'énergie produite en sortie depuis l'unité de génération d'énergie (151B) en tant qu'énergie nominale, et
l'unité de commande (230) est configurée pour ordonner le mode de génération d'énergie nominale lorsque le mode de fonctionnement de l'unité de pile à combustible (150) reçoit l'ordre de charge la batterie de stockage.

4. Appareil de commande (200) selon la revendication 1, dans lequel
L'unité de commande (230) est configurée pour ordonner le changement du mode de fonctionnement de l'unité de pile à combustible au mode de fonctionnement eu ralenti lorsqu'une panne survient.

5. Appareil de commande (200) selon la revendication 1, dans lequel
l'unité de génération d'énergie (151B) possède une pile à combustible d'un système SOFC.

6. Appareil de commande (200) selon la revendication 1, dans lequel la température de génération d'énergie est de 650 °C à 1000 °C.

7. Système de pile à combustible comprenant : une unité de pile à combustible (150) comprenant une unité de génération d'énergie (151B) qui est configurée pour générer de l'énergie lors d'une réaction chimique et des éléments auxiliaires qui sont configurés pour faciliter un fonctionnement de l'unité de génération d'énergie (151B) ; et une unité de batterie de stockage (140) qui possède une batterie de stockage (141) chargée par l'énergie fournie depuis un réseau ou l'unité de génération d'énergie (151B) ; comprenant en outre :
une unité de commande (230) qui est configurée pour commander un fonctionnement de l'unité de pile à combustible (150) par l'un de plusieurs modes de fonctionnement, les modes de fonctionnement comprenant un mode de génération d'énergie destiné la réalisation agressive de génération d'énergie par l'unité de génération d'énergie (151B), le mode de génération d'énergie comprenant un mode de suivi de charge et un mode de génération d'énergie nominale dans lequel la consommation d'énergie des éléments auxiliaires et la consommation d'énergie de la charge sont couvertes par l'énergie produite en sortie depuis l'unité de génération d'énergie et dans lequel, dans le mode de génération d'énergie nominale, le surplus d'énergie est fourni à la batterie de stockage ; et un mode de température constante destiné à la réalisation d'une commande pour couvrir une consommation d'énergie des éléments auxiliaires par l'énergie fournie depuis l'extérieur et d'une commande pour maintenir une température de l'unité de génération d'énergie (151B) constante dans une plage de températures prédéterminée, où la production en sortie d'énergie depuis l'unité de génération d'énergie (151B) est plus petite que la consommation d'énergie des éléments auxiliaires, dans lequel
l'unité de commande (230) est configurée pour commander le changement du mode de fonctionnement de l'unité de pile à combustible (150) au mode de température constante de sorte que la batterie de stockage (141) soit chargée par l'énergie fournie depuis le réseau, lorsque la batterie de stockage (141) est chargée et lorsqu'un prix unitaire d'achat d'énergie depuis le réseau public tombe sous une valeur prédéterminée,
dans lequel la quantité de combustible à fournir à l'unité de génération d'énergie (151B) dans le mode de température constante est plus petite que la quantité de combustible à fournir à l'unité de génération d'énergie (151B) dans le mode de génération d'énergie,
**caractérisé en ce que**
la valeur prédéterminée est un prix unitaire de génération d'énergie de l'unité de génération d'énergie (151B) dans le mode de génération d'énergie nominale pour commander la production en sortie d'énergie depuis l'unité de génération d'énergie (151B),
dans lequel la plage de température prédéterminée dans le mode de température constante est de 450 °C à 600 °C,
dans lequel le mode de fonctionnement de l'unité de pile à combustible (150) comprend en outre un mode de fonctionnement au ralenti dans lequel la production en sortie d'énergie depuis l'unité de génération d'énergie (151B) n'est pas fournie à une charge et la température de l'unité de génération d'énergie (151B) est maintenue à une température de génération d'énergie,
dans lequel dans le mode de fonctionnement au ralenti, la consommation d'énergie des éléments auxiliaires est couverte par l'énergie produite en sortie depuis l'unité de génération d'énergie (151B) et l'énergie produite en sortie de l'unité de pile à combustible (150) est commandée pour être nulle,
dans lequel la plage de températures prédéterminée dans le mode de température constante est plus basse que la température de génération d'énergie dans le mode de génération d'énergie et le mode de fonctionnement au ralenti.

8. Procédé de commande qui commande une unité de pile à combustible (150) comprenant une unité de génération d'énergie (151B) qui est configurée pour générer de l'énergie lors d'une réaction chimique et des éléments auxiliaires qui sont configurés pour faciliter un fonctionnement de l'unité de génération d'énergie (151B), et une unité de batterie de stockage (140) qui possède une batterie de stockage (141) chargée par l'énergie fournie depuis un réseau ou l'unité de génération d'énergie (151B), comprenant
une étape consistant à ordonner l'un des modes de fonctionnement à l'unité de pile à combustible (150) les modes de fonctionnement comprenant un mode de génération d'énergie destiné la réalisation agressive de génération d'énergie par l'unité de génération d'énergie (151B), le mode de génération d'énergie comprenant un mode de suivi de charge et un mode de génération d'énergie nominale dans lequel la consommation d'énergie des éléments auxiliaires et la consommation d'énergie de la charge sont couvertes par l'énergie produite en sortie depuis l'unité de génération d'énergie et dans lequel, dans le mode de génération d'énergie nominale, le surplus d'énergie est fourni à la batterie de stockage ; et un mode de température constante destiné à la réalisation d'une commande pour couvrir une consommation d'énergie des éléments auxiliaires par l'énergie fournie depuis l'extérieur et d'une commande pour maintenir une température de l'unité de génération d'énergie (151B) constante dans une plage de températures prédéterminée, où la production en sortie d'énergie depuis l'unité de génération d'énergie (151B) est plus petite que la consommation d'énergie des éléments auxiliaires, dans lequel
le mode de fonctionnement de l'unité de pile à combustible (150) est ordonné comme étant le mode de température constante de sorte que la batterie de stockage (141) soit chargé par l'énergie fournie depuis le réseau, lorsque la batterie de stockage (141) est chargée et lorsqu'un prix unitaire d'achat d'énergie depuis le réseau tombe sous une valeur prédéterminée,
dans lequel la quantité de combustible à fournir à l'unité de génération d'énergie (151B) dans le mode de température constante est plus petite que la quantité de combustible à fournir à l'unité de génération d'énergie (151B) dans le mode de génération d'énergie,
**caractérisé en ce que**
la valeur prédéterminée est un prix unitaire de génération d'énergie de l'unité de génération d'énergie (151B) dans le mode de génération d'énergie nominale pour commander la production en sortie d'énergie depuis l'unité de génération d'énergie (151B),
dans lequel la plage de température prédéterminée dans le mode de température constante est de 450 °C à 600 °C,
dans lequel le mode de fonctionnement de l'unité de pile à combustible (150) comprend en outre un mode de fonctionnement au ralenti dans lequel la production en sortie d'énergie depuis l'unité de génération d'énergie (151B) n'est pas fournie à une charge et la température de l'unité de génération d'énergie (151B) est maintenue à une température de génération d'énergie,
dans lequel dans le mode de fonctionnement au ralenti, la consommation d'énergie des éléments auxiliaires est couverte par l'énergie produite en sortie depuis l'unité de génération d'énergie (151B) et l'énergie produite en sortie de l'unité de pile à combustible (150) est commandée pour être nulle,
dans lequel la plage de températures prédéterminée dans le mode de température constante est plus basse que la température de génération d'énergie dans le mode de génération d'énergie et le mode de fonctionnement au ralenti.
